# EUROPEAN PATENT SPECIFICATION

(11) **EP 4 087 147 B1**
(45) Date of publication and mention of the grant of the patent: **07.10.2026**
(21) Application number: 20916125.6
(22) Date of filing: 13.08.2020
(51) Int. Cl.: H04B 3/04, H04L 25/03, H04L 25/49, H04B 3/48

(54) **CHANNEL COMPENSATION METHOD AND COMMUNICATION APPARATUS**
KANALAUSGLEICHSVERFAHREN UND KOMMUNIKATIONSVORRICHTUNG
PROCÉDÉ DE COMPENSATION DE CANAL ET APPAREIL DE COMMUNICATION

(30) Priority: 20.01.2020 CN 202010066194
(43) Date of publication of application: 09.11.2022
(73) Proprietor: Huawei Technologies Co., Ltd., Shenzhen, Guangdong 518129, (CN)
(72) Inventor: FANG, Liming, Shenzhen, Guangdong 518129 (CN); YANG, Yumeng, Shenzhen, Guangdong 518129 (CN); WANG, Jinshan, Shenzhen, Guangdong 518129 (CN); SUN, Yanbin, Shenzhen, Guangdong 518129 (CN); WANG, Chao, Shenzhen, Guangdong 518129 (CN); ZHAO, Yanbo, Shenzhen, Guangdong 518129 (CN); LIU, Jianfei, Shenzhen, Guangdong 518129 (CN)
(74) Representative: Maiwald GmbH
(86) International application number: PCT/CN2020/108997
(87) International publication number: WO 2021/147303

(56) References cited:
- EP-A1- 1 142 171
- CN-A- 1 870 427
- CN-A- 101 547 178
- CN-A- 103 763 037
- CN-A- 107 306 241
- US-A1- 2004 008 793
- MATSUDAIRA NOBUAKI ET AL: "An over-sampling adaptive pre-emphasis technique for multi-drop bus communication system", 2016 IEEE INTERNATIONAL SYMPOSIUM ON CIRCUITS AND SYSTEMS (ISCAS), IEEE, 22 May 2016 (2016-05-22), pages 2338 - 2341, XP032942059, DOI: 10.1109/ISCAS.2016.7539053
- CHERUBINI G ET AL: "ADAPTIVE ANALOG EQUALIZATION AND RECEIVER FRONT-END CONTROL FOR MULTILEVEL PARTIAL-RESPONSE TRANSMISSION OVER METALLIC CABLES", IEEE TRANSACTIONS ON COMMUNICATIONS, IEEE SERVICE CENTER, PISCATAWAY, NJ. USA, vol. 44, no. 6, 1 June 1996 (1996-06-01), pages 675 - 685, XP000599965, ISSN: 0090-6778, DOI: 10.1109/26.506384

## Description

### TECHNICAL FIELD

This application relates to the field of radar technologies, and in particular, to a channel compensation method and a communications apparatus.

### BACKGROUND

With development of science and technologies, intelligent vehicles gradually enter daily life. In addition to an increase in a quantity of installed vehicle-mounted devices, complexity of the intelligent vehicle also continuously increases, and accordingly a rate that needs to be met for communication between vehicles also increases. Currently, in an in-vehicle autonomous driving scenario, a signal may be transmitted through an Ethernet cable by using a single pair Ethernet (single pair Ethernet, SPE), to meet a requirement that, for example, a next-generation in-vehicle Ethernet standard supports a transmission rate from 10 gigabits per second (gigabit per second, Gbps) to 25 Gbps. However, a channel insertion loss (insertion loss, IL) of the SPE Ethernet cable is large. Consequently, bandwidth decreases as a cable length increases, and even a signal of 25 Gbps cannot be transmitted through the SPE Ethernet cable. The article by Matsudaira Nobuaki et al. refers to: "An over-sampling adaptive pre-emphasis technique for multi-drop bus communication system", 2016 IEEE International Symposium on Circuits and Systems (ISCAS), IEEE, 22 May 2016 (2016-05-22), pages 2338-2341, XP032942059. The article by Cherubini G et al. refers to "Adaptive Analog Equalization and Receiver Front-End Control for Multilevel Partial-Response Transmission over Metallic Cables", IEEE Transactions on Communications, IEEE Service Center, Piscataway, NJ. USA, vol. 44, no. 6, 1 June 1996 (1996-06-01), pages 675-685, XP000599965, ISSN: 0090-6778, DOI: 10.1109/26.506384. The EP 1 142 171 A1 refers to an adaptive pre-emphasis technique.

### SUMMARY

This application provides a channel compensation method and a communications apparatus, to reduce a channel insertion loss and improve a signal transmission rate in a cable communication process. The present invention is defined by the attached independent claims. Other preferred embodiments may be found in the dependent claims.

### BRIEF DESCRIPTION OF DRAWINGS

FIG. 1 is a schematic diagram of ILs of SPE Ethernet cables of different lengths;
FIG. 2 is a schematic diagram of a principle of channel equalization in the conventional technology;
FIG. 3 is a schematic diagram of a principle of channel pre-compensation in the conventional technology;
FIG. 4 is a schematic diagram of an application architecture according to an embodiment of this application;
FIG. 5 is a schematic diagram of another application architecture according to an embodiment of this application;
FIG. 6 is a schematic flowchart of a channel compensation method according to an embodiment of this application;
FIG. 7 is a schematic diagram of a test result of a signal that is not compensated for by a filter according to an embodiment of this application;
FIG. 8 is a schematic diagram of a test result of a signal that is compensated for by a filter according to an embodiment of this application;
FIG. 9 is a schematic diagram of a test result of a signal that is not compensated for by a filter according to an embodiment of this application;
FIG. 10 is a schematic diagram of a test result of a signal that is compensated for by a filter according to an embodiment of this application;
FIG. 11 is a schematic diagram of a test result of a filter according to an embodiment of this application; and
FIG. 12 is a schematic diagram of a test result of a filter according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

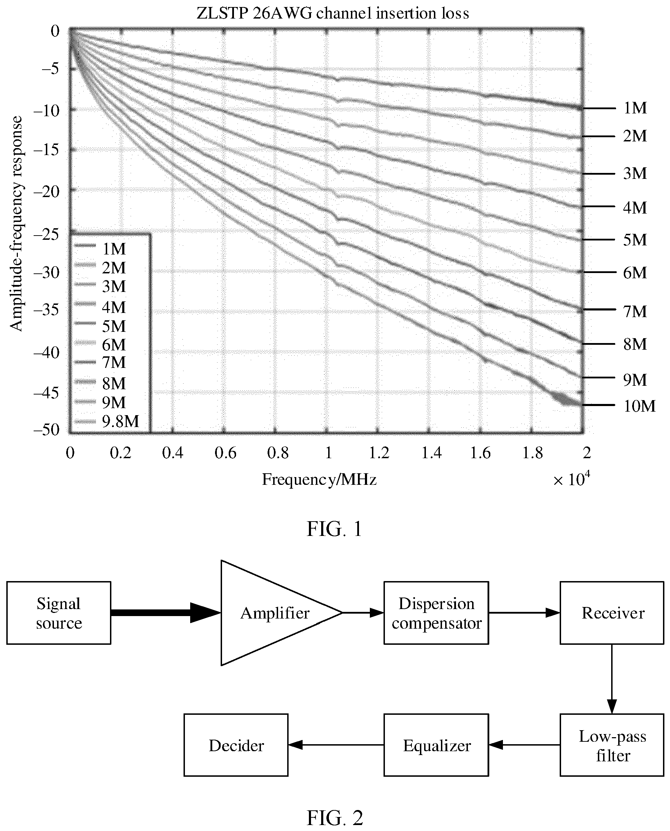

Before this application is described, some terms in embodiments of this application are first briefly explained and described, to help a person skilled in the art have a better understanding.
(1) An IL indicates a signal loss caused by a cable or component inserted between a transmitter and a receiver. The IL is related to a length of the cable. Compared with a conventional Ethernet cable, an SPE Ethernet cable has a larger IL. A longer cable length corresponds to a larger IL. FIG. 1 is a schematic diagram of ILs of SPE Ethernet cables of different lengths. It can be seen from FIG. 1 that a longer cable corresponds to a larger IL. In FIG. 1, a horizontal coordinate indicates a frequency, a vertical coordinate indicates power, and a curve shown in FIG. 1 indicates a change trend of power of a signal with a frequency. Lengths of cables corresponding to curves from top to bottom increase sequentially. It can be seen from FIG. 1 that a longer cable and a steeper curve correspond to a larger power change of a signal, that is, a larger signal loss, namely, a larger channel insertion loss. It should be noted that a cable is used as a transmission medium for a channel, and a signal is transmitted through the channel, that is, the signal is transmitted through the cable. From this perspective, the cable is equivalent to the channel in this specification.
(2) Resolution of an ADC indicates a capability of the ADC to distinguish a minimum quantized signal. For example, a minimum quantized level that can be distinguished by a 10-bit ADC is one tenth power of 2 of a reference level (full scale). In other words, higher resolution indicates that a full scale level can be divided into more parts (the 10-bit ADC divides the full scale level into 2¹⁰ parts), a conversion result is more accurate, and a digital signal converted back by the DAC is closer to an original entered analog value.
   If a signal has a high baud rate, for example, a signal of 25 Gbps is transmitted with a high baud rate, a system requires a higher sampling rate on the ADC. Consequently, the resolution of the ADC is limited. To improve effective resolution of the ADC, a peak to average ratio (peak to average ratio, PAR) of the signal at a cable outlet needs to be reduced.
(3) A PAR is a ratio of peak power of a signal to average power of the signal. A larger PAR indicates that a full scale level can be divided into more parts. If effective power of an ADC is limited, it is naturally expected that the PAR becomes smaller.
(4) "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, in embodiments of this application, ordinal numbers such as "first" and "second" are used to distinguish between a plurality of objects, and are not intended to limit an order, a time sequence, a priority, or importance of the plurality of objects.

The foregoing describes some concepts in embodiments of this application. The following describes technical features in embodiments of this application.

To reduce an IL of an Ethernet cable in a communication process, the following two channel equalization solutions may be used currently, so as to compensate for inter-symbol interference (inter-symbol interference, ISI) caused by a reason such as a channel loss in the communication transmission process.

A first solution is a technical solution of channel post-equalization, that is, a channel equalizer is added after a receiver to reduce or eliminate the ISI as much as possible. For example, FIG. 2 is a schematic diagram of a principle of channel post-equalization. A signal generated by a signal source is transmitted through a channel (a cable shown by using a thick line), amplified by an amplifier, and transferred to a receiver by using a dispersion compensator. After receiving the signal, the receiver transfers the signal to a low-pass filter, the signal passes through an equalizer, and the equalizer reduces or eliminates ISI. It should be understood that FIG. 2 is merely an example. Alternatively, the equalizer may be disposed in the receiver, and is configured to compensate for or reduce the ISI of the signal received by the receiver. To achieve a better compensation effect, there may be a plurality of equalizers, and each equalizer corresponds to one compensation coefficient. The ISI may be reduced or eliminated based on the compensation coefficient, to implement, for example, signal compensation in time domain. It should be understood that in some embodiments, after equalizing the received signal, the equalizer may transfer an equalized signal to a decider. The decider is configured to use a decision output of a previously detected signal as an input, that is, estimate, based on a previously detected signal, the ISI of the signal that is currently being detected.

An SPE Ethernet cable attenuates a high-frequency part of the signal greatly. As a result, a signal-to-noise ratio (signal-to-noise ratio, SNR) of the high-frequency part of the signal is much lower than a signal-to-noise ratio of a low-frequency part of the signal after the signal passes through the SPE Ethernet cable. However, in the post-channel equalization solution, the high-frequency part of the signal is attenuated much before the signal enters the equalizer. As a result, compensation for the high-frequency part of the signal is limited in the post-channel equalization solution. In addition, the channel post-equalization solution is implemented after an ADC, that is, after the receiver receives the signal and the ADC performs analog-to-digital conversion on the signal, the equalizer compensates for the signal. Because signal compensation occurs after the ADC, a PAR of the signal before the signal enters the ADC cannot be reduced, that is, a PAR of the signal at a cable outlet cannot be reduced, and working performance of the ADC cannot be ensured.

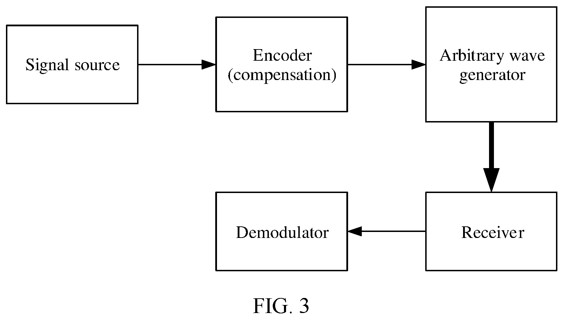

A second solution is a technical solution of pre-compensation. Different from channel post-equalization, the technical solution of pre-compensation is used to compensate for possible attenuation of a signal before a channel, that is, perform compensation in advance. For example, FIG. 3 is a schematic diagram of a principle of pre-compensation. A signal generated by a signal source is transferred to an encoder, and the encoder encodes the signal into a signal in a pulse amplitude modulation (pulse amplitude modulation, PAM) format, for example, a signal in a PAM4 format. Signals of different levels in the signals in the PAM4 format have different channel losses. Therefore, pre-compensation may be performed on the signal in the PAM format, that is, each to-be-sent level is adjusted in advance, so as to reduce a bit error rate (bit error rate, BER). It should be understood that pre-compensation is implemented in the encoder. After the signal passes through the encoder, an arbitrary wave generator converts the signal into an electrical signal, and then outputs the electrical signal to a receiver through a cable (shown by using a thick line in FIG. 3). After receiving the signal, the receiver transfers the signal to a demodulator to demodulate the signal. However, this solution is related to a modulation format of a signal, that is, this solution is feasible for the signal in the PAM format, but is not necessarily feasible for a signal in another format. In addition, pre-compensation is implemented in the encoder, and is mainly compensation performed in time domain, and there is no compensation on the signal in frequency domain. As a result, compensation for a high-frequency part of the signal is also limited. In addition, because compensation is implemented in the encoder, that is, implemented before the arbitrary wave generator, a PAR of the signal at a cable outlet cannot be reduced either.

To resolve the foregoing problems, in embodiments of this application, the signal can be compensated for in frequency domain, and the signal is compensated for before arriving at the SPE Ethernet cable. This improves an effective capacity of the cable, so that the cable can support transmission of the signal with a higher transmission rate. In addition, in embodiments of this application, the signal can be compensated for before entering the ADC. Therefore, the PAR of the signal before the signal enters the ADC is reduced, that is, the PAR of the signal at the cable outlet is reduced, thereby ensuring working performance of the ADC.

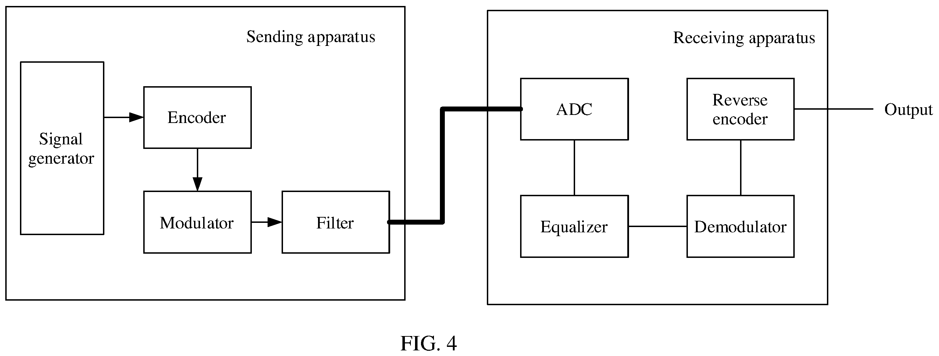

In a possible solution, an embodiment of this application provides a channel compensation method. The method may be applied to a communications system in which communication is performed through an SPE Ethernet cable. FIG. 4 is a diagram of an example architecture of the communications system. In FIG. 4, a sending apparatus, a receiving apparatus, and the SPE Ethernet cable (shown by using a thick line in the figure) used for communication between the sending apparatus and the receiving apparatus may be included. The sending apparatus may include, for example, a signal generator, an encoder, and a modulator. The receiving apparatus includes an ADC, an equalizer, a demodulator, and a reverse encoder. This embodiment of this application is intended to compensate for a signal before the signal arrives at the SPE Ethernet cable. In an implementation, the sending apparatus in this embodiment of this application may further include a filter configured to compensate for a signal generated by the signal generator.

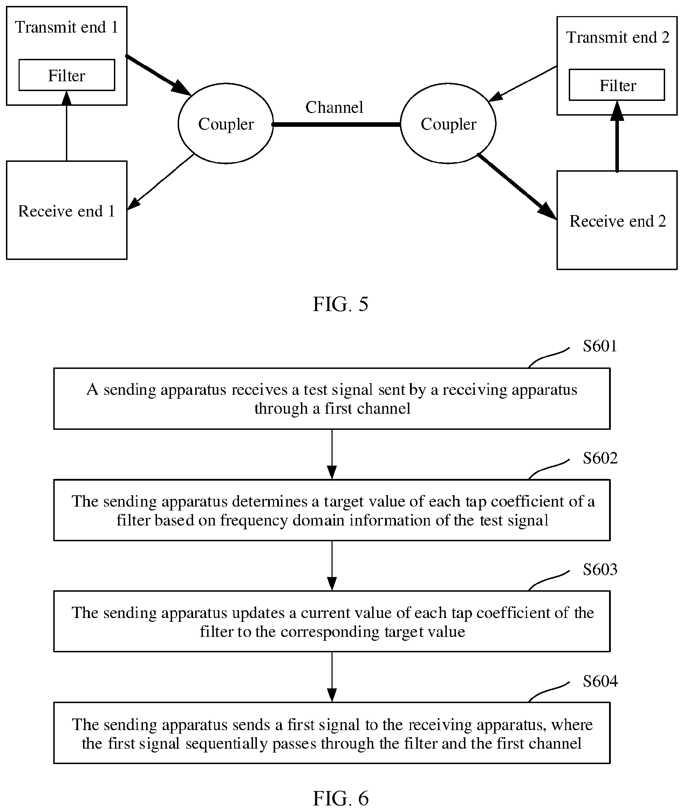

FIG. 5 is a diagram of another example architecture of the communications system. It should be understood that a sending apparatus is relative to a receiving apparatus. The sending apparatus may also be referred to as a transmit end, and the corresponding receiving apparatus may be referred to as a receive end. A first apparatus and a second apparatus each have receiving and sending functions. In this embodiment of this application, the first apparatus and the second apparatus each include a transmit end and a receive end. For ease of differentiation, in FIG. 5, for example, the first apparatus includes a transmit end 1 and a receive end 1, and the second apparatus includes a transmit end 2 and a receive end 2. In FIG. 5, a thick line is used to indicate a channel, namely, a cable. It should be understood that signals sent or received by the first apparatus and the second apparatus need to pass through a coupler. The coupler may be configured to isolate a signal sent by the first apparatus to the second apparatus from a signal received by the first apparatus from the second apparatus. It should be noted that, an example in which the cable is the SPE Ethernet cable is used in this specification, or the cable may be another possible cable. This is not limited in embodiments of this application. That communication transmission is performed through the SPE Ethernet cable is merely used as an example in embodiments of this application, but this is not limited to this scenario.

The following describes the channel compensation method provided in this embodiment of this application with reference to the accompanying drawings. FIG. 6 is a flowchart of the method. In the following description process, an example in which the method is applied to the communications system shown in FIG. 5 is used. In addition, the method may be performed by two communications apparatuses. The two communications apparatuses are, for example, a first apparatus and a second apparatus. For ease of description, an example in which the method is performed by a sending apparatus and a receiving apparatus, that is, the first apparatus is the sending apparatus, and the second apparatus is the receiving apparatus is used below. A procedure of the channel compensation method provided in this embodiment of this application is described as follows.

S601: The sending apparatus receives a test signal sent by the receiving apparatus through a first channel.

Generally, a signal is attenuated when being transmitted through a channel, that is, a signal loss occurs. For example, if the sending apparatus and the receiving apparatus perform communication transmission through the first channel, a signal loss occurs when a signal sent by the sending apparatus to the receiving apparatus passes through the first channel. Likewise, a signal loss also occurs when the signal sent by the receiving apparatus to the sending apparatus passes through the first channel. It should be understood that signal losses are different when a signal is transmitted through channels of different lengths. In the following description, for example, a length of the first channel is a first length.

To reduce or avoid the signal loss of the signal passing through the channel, pre-compensation is performed on the signal before the signal passes through the channel. In a possible implementation, a filter 1 is disposed at the transmit end, for example, the transmit end 1 of the sending apparatus, and the filter 1 performs pre-compensation on a signal to be sent to the receiving apparatus. A filter 2 may also be disposed at the transmit end 2 of the receiving apparatus, and the filter 2 performs pre-compensation on a signal to be sent to the sending apparatus. Pre-compensation performed by a filter on a signal is essentially adjusting an amplitude and the like of the signal based on a tap coefficient of the filter. One filter includes a plurality of tap coefficients. To better pre-compensate for the signal, a multi-order filter may be disposed, and each order of the filter corresponds to a plurality of tap coefficients. It may be considered that a signal after pre-compensation and a signal before pre-compensation meet the following formula:$Output \left[n\right] = Index \left[1\right] * Input \left[n-i+1\right] + Index \left[2\right] * Input \left[n-i+2\right] + … + Index \left[i\right] * Input \left[n\right]$ (1)

In formula (1), Index[i] indicates an i^{th} tap coefficient of a filter, Input[n] indicates an n^{th} input signal, and Output[n] indicates an n^{th} output signal.

It may be understood that the filter is generally based on a tapped delay line model, and a tap coefficient may be understood as a weighting coefficient. A signal pre-compensation result varies with a value of the tap coefficient. To improve an effective capacity of the channel as much as possible, so that the channel can support transmission of the signal with a higher transmission rate, before data transmission is performed, a value of the tap coefficient of the filter may be first determined, and the value may be considered as a value that can achieve a preferable compensation effect. The value is referred to as a target value below.

In a possible implementation, before sending the signal, the sending apparatus may determine related information of a test signal in a manner of sending the test signal, and then determine a target value of a tap coefficient of the filter, so that the target value is used when the signal is subsequently sent, to compensate for the to-be-sent signal. For example, in this embodiment of this application, the sending apparatus and the receiving apparatus may be simulated to perform communication transmission. For example, the transmit end 1 of the sending apparatus sends a test signal, and the test signal is transmitted to the receive end 2 of the receiving apparatus through the first channel. Certainly, the transmit end 2 of the receiving apparatus may also send a test signal, and the test signal is transmitted to the receive end 1 of the sending apparatus through the first channel, which is used as an example below. The test signal sequentially passes through the transmit end 2 and the first channel, and is transferred to the receive end 1 of the first apparatus. It should be understood that PAM modulation may be performed on the test signal before the test signal passes through the first channel, and analog-to-digital conversion may be performed on a modulated signal after the modulated signal passes through the first channel, and then a converted signal is transmitted to the receive end 1. A signal loss occurs when the test signal passes through the first channel. Therefore, the receive end 1 can determine related information of the signal loss of the test signal, and determine a target value of a tap coefficient of the filter based on the related information, and can pre-compensate for, based on the target value, a data signal to be sent subsequently.

S602: The sending apparatus determines the target value of each tap coefficient of the filter based on frequency domain information of the test signal.

The foregoing current channel compensation is mainly compensation performed on the signal in time domain, without compensation performed on the signal in frequency domain. In particular, compensation for the high-frequency part of the signal is limited. Therefore, this embodiment of this application proposes pre-compensation that is performed on the signal in frequency domain. It may be considered that the target value of each tap coefficient of the filter is determined based on the frequency domain information of the test signal. It should be understood that, because the target value is determined based on the frequency domain information of the test signal, a loss of the signal in frequency domain may be compensated for based on the target value, that is, the signal is pre-compensated for in frequency domain.

In this embodiment of this application, the frequency domain information of the test signal is represented by some characteristic parameters of the test signal. For example, the frequency domain information of the test signal is represented by a signal-to-noise ratio of the test signal in frequency domain, for example, a difference between a maximum signal-to-noise ratio and a minimum signal-to-noise ratio of the test signal in frequency domain. Alternatively, the frequency domain information of the test signal is represented by energy of the test signal in frequency domain, for example, a difference between high-frequency energy and low-frequency energy of the test signal, a ratio of peak energy to average energy of the test signal, or an amplitude-frequency response of the test signal. It should be understood that the foregoing merely enumerates several representations of the frequency domain information of the test signal, and this embodiment of this application is not limited to represent the frequency domain information of the test signal by these several characteristic parameters.

Manners of determining each tap coefficient of the filter vary with different frequency domain information of the test signal, and the determining manners are described separately below.

Determining manner 1: The frequency domain information of the test signal is used to indicate a difference between high-frequency energy of the test signal and low-frequency energy of the test signal. The sending apparatus determines the frequency domain information of the test signal based on the difference between the high-frequency energy of the test signal and the low-frequency energy of the test signal.

The sending apparatus may adjust a value of a tap coefficient of the filter until the difference between the high-frequency energy and the low-frequency energy of the test signal that passes through the filter is the smallest. In this case, a corresponding value of the tap coefficient of the filter may be considered as preferable, namely, the target value. For example, a first tap coefficient of the filter is adjusted. The sending apparatus may increase a value of the first tap coefficient of the filter; if the difference between the high-frequency energy and the low-frequency energy of the test signal becomes smaller after the test signal passes through the filter whose first tap coefficient is adjusted, continue to increase the value of the first tap coefficient until the difference between the high-frequency energy and the low-frequency energy of the test signal that passes through the filter whose first tap coefficient is adjusted is the smallest; and determine a corresponding value of the first tap coefficient as the target value in this case. Alternatively, if the difference between the high-frequency energy and the low-frequency energy of the test signal becomes larger after the test signal passes through the filter whose first tap coefficient is adjusted for the first time, the sending apparatus may decrease the value of the first tap coefficient until the difference between the high-frequency energy and the low-frequency energy of the test signal that passes through the filter is the smallest; and determine a corresponding value of the first tap coefficient as the target value in this case.

It should be understood that the filter includes a plurality of tap coefficients, and when the value of the first tap coefficient is adjusted, a value of a tap coefficient other than the first tap coefficient is kept unchanged.

For example, it is assumed that energy of the test signal at a frequency f1 is P1, and energy at a frequency f2 is P2, where f2>f1. In this embodiment of this application, the target value of each tap coefficient of the filter is determined based on ΔP=P1-P2. For example, when the filter is a second-order filter, that is, includes two tap coefficients, it is assumed that a start value of the first tap coefficient is [1, -1]. The sending apparatus may keep a value of a second tap coefficient unchanged, and adjust the value of the first tap coefficient. For example, the sending apparatus gradually increases the value of the first tap coefficient, for example, from [1, -1] to [1, -0.9], and calculates a value of ΔP; and if ΔP is smaller than ΔP before the value of the first tap coefficient is adjusted, continues to increase the value of the first tap coefficient until ΔP is the smallest. In this case, a value of the first tap coefficient is the target value. Alternatively, if ΔP is larger than ΔP before the value of the first tap coefficient is adjusted, the sending apparatus decreases the value of the first tap coefficient until ΔP is the smallest. In this case, a value of the first tap coefficient is the target value.

Determining manner 2: The frequency domain information of the test signal is used to indicate a ratio of peak energy to average energy of the test signal. The sending apparatus determines the frequency domain information of the test signal based on the ratio of the peak energy to the average energy of the test signal.

Similar to Determining manner 1, assuming that a target value of a first tap coefficient of the filter is determined, a value of another tap coefficient of the filter is kept unchanged. The sending apparatus may adjust a value of the first tap coefficient until the ratio of the peak energy to the average energy of the test signal that passes through the filter is the smallest. In this case, a corresponding value of the first tap coefficient is the target value. For example, the sending apparatus may increase the value of the first tap coefficient of the filter; if the ratio of the peak energy to the average energy of the test signal becomes smaller after the test signal passes through the filter whose first tap coefficient is adjusted, continue to increase the value of the first tap coefficient until the ratio of the peak energy to the average energy of the test signal that passes through the filter whose first tap coefficient is adjusted is the smallest; and determine the corresponding value of the first tap coefficient as the target value in this case. Alternatively, if the ratio of the peak energy to the average energy of the test signal becomes larger after the test signal passes through the filter whose first tap coefficient is adjusted for the first time, the sending apparatus may decrease the value of the first tap coefficient until the ratio of the peak energy to the average energy of the test signal that passes through the filter is the smallest; and determine the corresponding value of the first tap coefficient as the target value in this case. Determining manner 3: The frequency domain information of the test signal is used to indicate a difference between a maximum signal-to-noise ratio and a minimum signal-to-noise ratio of the test signal. The sending apparatus determines the frequency domain information of the test signal based on the difference between the maximum signal-to-noise ratio and the minimum signal-to-noise ratio of the test signal.

Similar to Determining manner 1, assuming that a target value of a first tap coefficient of the filter is determined, a value of another tap coefficient of the filter is kept unchanged. The sending apparatus may adjust a value of the first tap coefficient until the difference between the maximum signal-to-noise ratio and the minimum signal-to-noise ratio of the test signal that passes through the filter is the smallest. In this case, a corresponding value of the first tap coefficient is the target value. For example, the sending apparatus may increase the value of the first tap coefficient of the filter; if the difference between the maximum signal-to-noise ratio and the minimum signal-to-noise ratio of the test signal becomes smaller after the test signal passes through the filter whose first tap coefficient is adjusted, continue to increase the value of the first tap coefficient until the difference between the maximum signal-to-noise ratio and the minimum signal-to-noise ratio of the test signal that passes through the filter whose first tap coefficient is adjusted is the smallest; and determine the corresponding value of the first tap coefficient as the target value in this case. Alternatively, if the difference between the maximum signal-to-noise ratio and the minimum signal-to-noise ratio of the test signal becomes larger after the test signal passes through the filter whose first tap coefficient is adjusted for the first time, the sending apparatus may decrease the value of the first tap coefficient until the difference between the maximum signal-to-noise ratio and the minimum signal-to-noise ratio of the test signal that passes through the filter is the smallest; and determine the corresponding value of the first tap coefficient as the target value in this case. Determining manner 4: The frequency domain information of the test signal is used to indicate an amplitude-frequency response of the test signal. The sending apparatus determines the frequency domain information of the test signal based on the amplitude-frequency response of the test signal.

Similar to Determining manner 1, assuming that a target value of a first tap coefficient of the filter is determined, a value of another tap coefficient of the filter is kept unchanged. The sending apparatus may adjust a value of the first tap coefficient until the amplitude-frequency response of the test signal that passes through the filter is smoothest. In this case, a corresponding value of the first tap coefficient is the target value. For example, the sending apparatus may increase the value of the first tap coefficient of the filter; if the amplitude-frequency response of the test signal becomes smoother after the test signal passes through the filter whose first tap coefficient is adjusted, continue to increase the value of the first tap coefficient until the amplitude-frequency response of the test signal that passes through the filter whose first tap coefficient is adjusted is smoothest; and determine the corresponding value of the first tap coefficient as the target value in this case. Alternatively, if the amplitude-frequency response of the test signal changes steeper after the test signal passes through the filter whose first tap coefficient is adjusted for the first time, the sending apparatus may decrease the value of the first tap coefficient until the amplitude-frequency response of the test signal that passes through the filter is smoothest; and determine the corresponding value of the first tap coefficient as the target value in this case.

S603: The sending apparatus updates a current value of each tap coefficient of the filter to the corresponding target value.

After determining the target value of each tap coefficient of the filter, the sending apparatus may update the current value of each tap coefficient of the filter. For example, the sending apparatus may write a target value of any tap coefficient into the filter, for example, write into a register of the filter. The receive end 1 of the sending apparatus may send a write instruction to the filter 1 at the transmit end 1, where the write instruction includes the target value of each tap coefficient and is used to write the target value to the register of filter 1. It should be understood that the receive end 1 may also send the write instruction to the transmit end 1, and the transmit end 1 receives the write instruction, and writes the target value into the register of the filter 1, so as to update to the target value of each tap coefficient.

S604: The sending apparatus sends a first signal to the receiving apparatus, where the first signal sequentially passes through the filter and the first channel.

After updating to the target value of each tap coefficient of the filter, the sending apparatus may send a data signal, for example, the first signal, to the receiving apparatus through the first channel. It should be understood that, as shown in FIG. 4, at the transmit end, the first signal may sequentially pass through modulation, the filter, and the first channel, and be output to the receiving apparatus. At the receive end, the first signal sequentially passes through analog-to-digital conversion, the equalizer, the demodulator, and the reverse encoder. Because the current value of each tap coefficient of the filter is the target value, it may be considered that a good compensation effect can be achieved after the first signal is compensated for by the filter in this case. Therefore, after the first signal passes through the first channel, a signal loss of the first signal is eliminated to some extent. Then, the equalizer equalizes the first signal that has been compensated for, and at the same time equalizes a noise. The equalizer generally adjusts a tap coefficient to correct or compensates a system feature. An equalization method includes linear equalization and nonlinear equalization. Linear equalization may use a zero forcing method, a minimum mean square error method, a recursive least square algorithm, or the like. Nonlinear equalization may use decision feedback equalizer, maximum likelihood detection, or the like. A used algorithm is not limited in this application. It should be understood that, because the target value of each tap coefficient of the filter is determined based on the frequency domain information of the test signal, it may be considered that the signal can be better compensated for in frequency domain by using the target value. Because the filter 1 at the transmit end 1 performs pre-compensation on the first signal in frequency domain, attenuation in a high frequency part of the first signal is reduced when the first signal passes through the first channel, so that the equalizer can perform effective compensation on the high frequency part of the first signal. This improves the effective capacity of the first channel, so that the first channel can support transmission of the signal with the higher transmission rate. In addition, in this embodiment of this application, the first signal sequentially passes through the filter of the sending apparatus and the first channel. That is, before the signal enters the ADC of the receiving apparatus, the first signal is compensated for. Therefore, a PAR of the first signal before the first signal enters the ADC can be reduced, that is, a PAR of the signal at an outlet of the first channel is reduced, thereby ensuring working performance of the ADC as much as possible, and improving usage efficiency of the ADC.

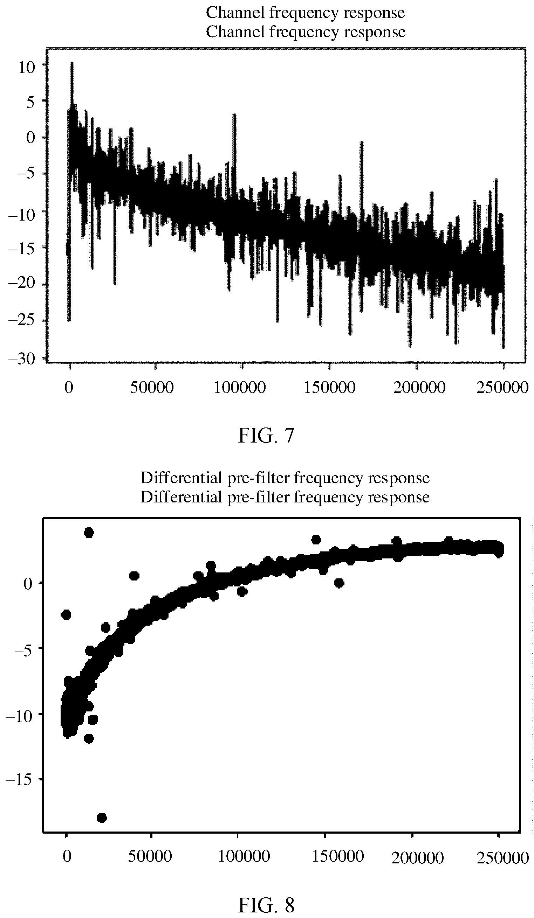

In this embodiment of this application, an effect of compensation performed on the signal by the filter is tested based on the processing procedure shown in FIG. 6. A test object is a second-order filter, that is, the filter includes two tap coefficients. FIG. 7 is a schematic diagram of a frequency response of the test signal that is transmitted through a channel with a length of 15 m and that is not compensated for by the filter. FIG. 8 is a schematic diagram of a frequency response of the test signal that is compensated for by the filter. In each of FIG. 7 and FIG. 8, a horizontal coordinate indicates a frequency, and a vertical coordinate indicates power. It should be understood that values of the two tap coefficients of the filter corresponding to FIG. 8 are target values, namely, two target values determined in any one of the foregoing Determining manner 1 to Determining manner 4. One target value is a positive number, and the other target value is a negative number. In other words, one of the two tap coefficients of the filter is a positive number, and the other tap coefficient is a negative number. For example, a tap coefficient, of the second-order filter, determined based on processing shown in FIG. 6 may be [1, -0.9].

FIG. 7 is compared with FIG. 8, and it can be seen that most of signal strength of the test signal at a high frequency band is compensated for, thereby canceling a part of channel attenuation.

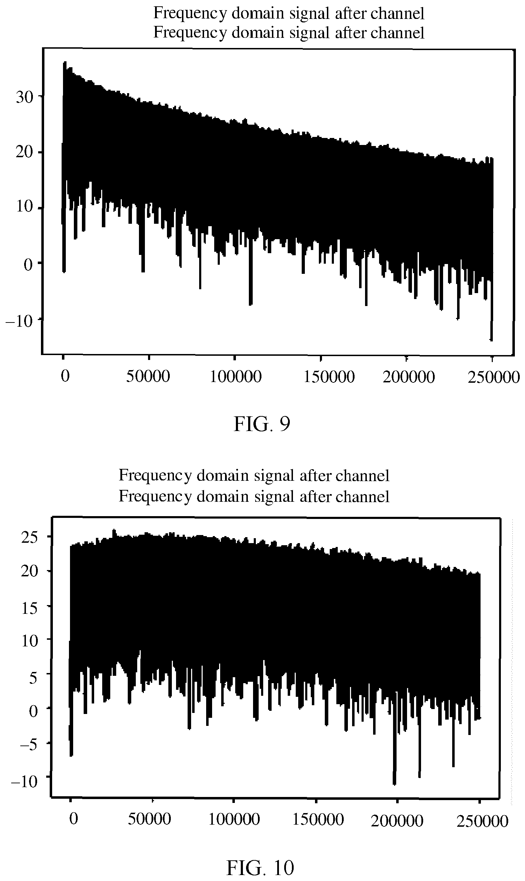

Based on the processing procedure shown in FIG. 6, in this embodiment of this application, effects of performing compensation by the filter, and not performing compensation by the filter are tested when the signal is transmitted through the first channel. A test object is the first channel, for example, an SPE Ethernet cable with a length of 15 m. For example, the first signal is a PAM4 modulation signal. FIG. 9 is a schematic diagram of a frequency response of the first signal that is through the first channel and that is not pre-compensated for by the filter 1. FIG. 10 is a schematic diagram of a frequency response of the first signal that is through the first channel and that is pre-compensated for by the filter 1. In each of FIG. 9 and FIG. 10, a horizontal coordinate indicates a frequency, and a vertical coordinate indicates power.

FIG. 9 is compared with FIG. 10, that is, the frequency response of the first signal that is not pre-compensated for by the filter is compared with the frequency response of the first signal that is compensated for by the filter, and it can be seen that when the first signal is not pre-compensated for, attenuation of the first signal in frequency domain is steeper (a power range of the first signal is approximately [18 dBm, 35 dBm]); and after the first signal is pre-compensated for, the attenuation of the first signal in frequency domain is smoother (a power range of the first signal is approximately [18 dBm, 25 dBm]). This is because the filter in this application can increase a gain of the high-frequency part of the signal while ensuring that transmit power remains unchanged, so as to offset the part of attenuation caused by the channel.

It should be noted that, according to the solutions provided in embodiments of this application, SNRs at the receive end of a system can be distributed more evenly in frequency domain, thereby improving an overall SNR. In addition, because level distribution of the to-be-sent signal is indirectly changed in a compensation process, a PAR at an entrance of the ADC at the receive end is reduced.

The foregoing embodiment is used for the first channel of the first length. Because the signal is transmitted through channels of different lengths, signal losses are different. Therefore, in this embodiment of this application, a plurality of channels of different lengths can be separately tested. In other words, a corresponding target value of each tap coefficient of the filter is determined for a channel of each length based on the processing procedure shown in FIG. 6. In this embodiment of this application, target values of tap coefficients of the filter corresponding to a plurality of different lengths may be obtained in advance. For example, the receiving apparatus may send the test signal to the sending apparatus through a first channel of a second length. Correspondingly, the sending apparatus may determine a target value of each tap coefficient of the filter corresponding to the second length, and may determine a target value of each tap coefficient of the filter corresponding to another length in a same way. In this embodiment of this application, the target values of the tap coefficients of the filter corresponding to the plurality of different lengths can be obtained, so as to establish a correspondence between a channel of a different length and a target value of each tap coefficient of the filter. A correspondence is shown in Table 1 below.

**Table 1**

| Channel length | Tap coefficient 1 of a filter | Tap coefficient 2 of the filter | Tap coefficient n of the filter |
|---|---|---|---|
| 1m | A1 | B1 | ... |
| 2 m | A2 | B2 | ... |
| ... | ... | ... | ... |
| 15 m | A15 | B15 | ... |
| ... | ... | ... | ... |

In Table 1, for example, tap coefficients of the filter include the tap coefficient 1, the tap coefficient 2, ..., and the tap coefficient n. Table 1 shows only target values of tap coefficients corresponding to, for example, channels of 1 m, 2 m, and 15 m. It should be understood that Table 1 is not limited to a correspondence between channels of 1 m, 2 m, and 15 m and the target parameters. In some embodiments, Table 1 is also referred to as a mapping table, and may be stored in the sending apparatus.

It should be understood that, generally, a signal loss is approximately fixed when a signal passes through a channel of a specific length, and it may be considered that frequency domain information of the signal is approximately fixed. From this perspective, as a variation of the correspondence in Table 1, a correspondence between the frequency domain information of the signal and each tap coefficient of the filter may also be established in this embodiment of this application. For ease of description, in the following, a correspondence between the length of the channel and each tap coefficient of the filter is referred to as a first correspondence, and the correspondence between the frequency domain information of the signal and each tap coefficient of the filter is referred to as a second correspondence. It should be understood that the second correspondence may also be stored in the sending apparatus.

In a possible application scenario, the sending apparatus stores the first correspondence. Before sending the signal to the receiving apparatus, the sending apparatus may first determine a length of the first channel, for example, a third length, and then, the sending apparatus may determine, based on the third length and the first correspondence, a target value, of each tap coefficient of the filter, corresponding to the third length. Then, the sending apparatus may update a current value of each tap coefficient of the filter to the target value, and then send the signal to the receiving apparatus. It should be noted that a sequence in which the sending apparatus determines the length of the first channel and obtains the first correspondence is not limited in this embodiment of this application. For example, the first apparatus may first obtain the first correspondence, and then, determine the length of the first channel.

Likewise, in another possible application scenario, the receiving apparatus may first send the signal to the sending apparatus, and the sending apparatus may determine frequency domain information of the signal, and determine a corresponding target value of each tap coefficient of the filter based on the frequency domain information of the signal and the second correspondence. Then, the sending apparatus may update a current value of each tap coefficient of the filter to the target value, and then send the signal to the receiving apparatus. According to this solution, each time before the sending apparatus or the receiving apparatus sends the signal, the sending apparatus or the receiving apparatus can determine the target value of each tap coefficient of the filter without sending the test signal to the peer end, thereby automatically performing pre-compensation on the to-be-sent signal.

It should be understood that the sending apparatus and the receiving apparatus are used as the two communication parties, and the sending apparatus is relative to the receiving apparatus. In other words, the receiving apparatus sends the signal to the sending apparatus, and the receiving apparatus may also be considered as the sending apparatus. Therefore, in some embodiments, after determining the first correspondence and the second correspondence, the foregoing sending apparatus may send the first correspondence and the second correspondence to the receiving apparatus, so that when sending the signal, the receiving apparatus can determine, based on the first correspondence and/or the second correspondence, the target value of each tap coefficient of the filter disposed in the receiving apparatus, thereby compensating for the to-be-sent signal.

It should be noted that in the technical solutions provided in embodiments of this application, a signal format is not limited, that is, a signal modulation scheme is not limited. For example, in addition to the PAM signal, the technical solutions are also applicable to a quadrature amplitude modulation (quadrature amplitude modulation, QAM) signal and an orthogonal frequency division multiplexing (orthogonal frequency division multiplexing, OFDM) signal. In addition, a transmission medium is not limited in embodiments of this application. For example, in addition to the SPE Ethernet cable, a Cat 5e cable and a Cat 6 cable are also applicable. A usage scenario is not limited in embodiments of this application. For example, in addition to an in-vehicle Ethernet, embodiments of this application are also applicable to scenarios such as an in-vehicle intranet and a campus network, and a scenario in which a high transmission rate is required.

In the foregoing embodiments provided in this application, the method provided in embodiments of this application is described by using the first apparatus as an execution body. To implement functions in the method provided in the foregoing embodiments of this application, the first apparatus may include a hardware structure and/or a software module, to implement the foregoing functions by using the hardware structure, the software module, or a combination of the hardware structure and the software module. Whether a specific function in the foregoing functions is performed by using a hardware structure, a software module, or a combination of the hardware structure and the software module depends on a specific application and a design constraint of the technical solutions.

With reference to the accompanying drawings, the following describes apparatuses configured to implement the foregoing method in embodiments of this application. Therefore, all the foregoing content may be used in the following embodiments. Repeated content is not described again.

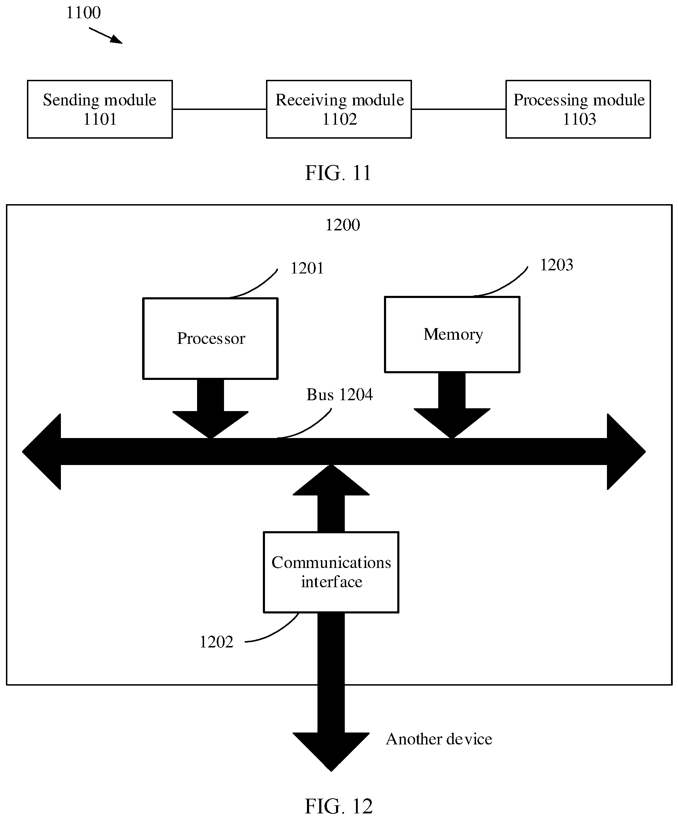

FIG. 11 is a possible example block diagram of a communications apparatus in this application. The communications apparatus 1100 may correspondingly implement functions or steps implemented by the sending apparatus in the foregoing method embodiments. The communications apparatus 1100 includes a sending module 1101, a receiving module 1102, and a processing module 1103. Optionally, the apparatus may further include a storage module. The storage module may be configured to store instructions (codes or programs) and/or data. The sending module 1101, the receiving module 1102, and the processing module 1103 may be coupled to the storage module. For example, the processing module 1103 may read the instructions (codes or programs) and/or data in the storage module, to implement the corresponding method. The foregoing modules may be disposed independently, or may be partially or totally integrated.

In some possible implementations, the communications apparatus 1100 can correspondingly implement behavior and functions of the sending apparatus (the first apparatus) in the foregoing method embodiments. For example, the communications apparatus 1100 may be the first apparatus, or may be a component (for example, a chip or a circuit) used in the first apparatus. The sending module 1101 and the receiving module 1102 may be configured to perform all receiving or sending operations performed by the first apparatus in the embodiment shown in FIG. 6, for example, S601 and S604 in the embodiment shown in FIG. 6; and/or configured to support another process of the technology described in this specification. The processing module 1103 is configured to perform all operations except the sending and receiving operations performed by the first apparatus in the embodiment shown in FIG. 6, for example, S602 and S603 in the embodiment shown in FIG. 6; and/or configured to support another process of the technology described in this specification.

In some embodiments, the receiving module 1102 is configured to receive a test signal sent by the first apparatus through a first channel, where the first channel is carried on the cable.

The processing module 1103 is configured to: determine a target value of each tap coefficient of a filter based on frequency domain information of the test signal, and update a current value of each tap coefficient of the filter to the target value, where the filter is configured to compensate for a signal sent by the communications apparatus.

The sending module 1101 is configured to send a first signal to the first apparatus, where the first signal sequentially passes through the filter and the first channel.

In a possible implementation, the frequency domain information of the test signal is used to indicate the smallest difference between high-frequency energy of the test signal and low-frequency energy of the test signal; the frequency domain information of the test signal is used to indicate the smallest ratio of peak energy of the test signal to average energy of the test signal; or the frequency domain information of the test signal is used to indicate the smallest difference between a maximum signal-to-noise ratio of the test signal in frequency domain and a minimum signal-to-noise ratio of the test signal in frequency domain.

In a possible implementation, the processing module 1103 is specifically configured to:
increase a value of a first tap coefficient of the filter;
if it is determined that a difference between the high-frequency energy and the low-frequency energy of the test signal that passes through the filter becomes smaller, continue to increase the value of the first tap coefficient until the difference between the high-frequency energy and the low-frequency energy of the test signal that passes through the filter is the smallest; or
if it is determined that a difference between the high-frequency energy and the low-frequency energy of the test signal that passes through the filter becomes larger, decrease the value of the first tap coefficient until the difference between the high-frequency energy and the low-frequency energy of the test signal that passes through the filter is the smallest; and
determine a value, of the first tap coefficient, obtained after adjustment as a target value of the first tap coefficient.

In an optional implementation, the processing module 1103 is specifically configured to:
increase a value of a first tap coefficient of the filter;
if it is determined that a ratio of the peak energy to the average energy of the test signal that passes through the filter becomes smaller, continue to increase the value of the first tap coefficient until the ratio of the peak energy to the average energy of the test signal that passes through the filter is the smallest; or
if it is determined that a ratio of the peak energy to the average energy of the test signal that passes through the filter becomes larger, decrease the value of the first tap coefficient until the ratio of the peak energy to the average energy of the test signal that passes through the filter is the smallest; and determine a value, of the first tap coefficient, obtained after adjustment as a target value of the first tap coefficient.

In an optional implementation, the processing module 1103 is specifically configured to:
increase a value of a first tap coefficient of the filter;
if it is determined that a difference between the maximum signal-to-noise ratio and the minimum signal-to-noise ratio of the test signal that passes through the filter becomes smaller, continue to increase the value of the first tap coefficient until the difference between the maximum signal-to-noise ratio and the minimum signal-to-noise ratio of the test signal that passes through the filter is the smallest; or
if it is determined that a difference between the maximum signal-to-noise ratio and the minimum signal-to-noise ratio of the test signal that passes through the filter becomes larger, decrease the value of the first tap coefficient until the difference between the maximum signal-to-noise ratio and the minimum signal-to-noise ratio of the test signal that passes through the filter is the smallest; and determine a value, of the first tap coefficient, obtained after adjustment as a target value of the first tap coefficient.

In a possible implementation, the processing module 1103 is further configured to:
obtain a target value of each tap coefficient of the filter corresponding to a second channel, where a length of the second channel is different from a length of the first channel; and
establish a correspondence between a length of a channel and a target value of each tap coefficient of the filter.

In a possible implementation, the sending module 1101 is further configured to:
send the correspondence to the first apparatus.

In some other embodiments, the processing module 1103 is configured to: determine, based on a length of a first channel and a preset correspondence, a target value of each tap coefficient of a filter disposed in the communications apparatus 1100, and update a current value of each tap coefficient of the filter to the target value, where the correspondence is used to represent a correspondence between a length of a channel and a target value of each tap coefficient of the filter, and the filter is configured to compensate for a signal sent by the communications apparatus 1100.

The sending module 1101 is configured to send a first signal to a second apparatus through the first channel, where the first signal sequentially passes through the filter and the first channel.

FIG. 12 is another possible example block diagram of a communications apparatus in this application. The communications apparatus 1200 may correspondingly implement functions or steps implemented by the sending apparatus in the foregoing method embodiments. The communications apparatus 1200 may include a processor 1201 and a communications interface 1202, and optionally, may further include a memory 1203. The processor 1201, the communications interface 1202, and the memory 1203 are communicatively connected to each other through a bus 1204.

The processor 1201 may be a general-purpose central processing unit (Central Processing Unit, CPU), a microprocessor, an application-specific integrated circuit (Application-Specific Integrated Circuit, ASIC), or one or more integrated circuits, and is configured to execute a related program, to implement the technical solutions provided in embodiments of this application.

The memory 1203 may be a read-only memory (Read-Only Memory, ROM), a static storage device, a dynamic storage device, or a random access memory (Random Access Memory, RAM). The memory 1203 may store computer program instructions. When the technical solutions provided in embodiments of this application are implemented by using software or firmware, program code used to implement the technical solutions provided in embodiments of this application is stored in the memory 1203, and is executed by the processor 1201.

The communications interface 1202 communicates with another device or a communications network by using, for example, without limitation, a transceiver apparatus such as a transceiver.

The bus 1204 may include a channel through which information is transmitted between components (for example, the processor 1201, the memory 1203, and the communications interface 1202).

When the communications apparatus 900 is implemented by using the communications apparatus 1200, the processor 1201 is configured to execute the program code that is stored in the memory 1203 and that is used to implement the technical solutions provided in embodiments of this application, to implement the method shown in the embodiment in FIG. 6.

It should be noted that although only the processor 1201, the memory 1203, the communications interface 1202, and the bus 1204 are shown in the communications apparatus 1200 shown in FIG. 12, during specific implementation, a person skilled in the art should understand that the foregoing channel compensation apparatuses further include other devices required to implement normal operation. In addition, according to specific requirements, a person skilled in the art should understand that the foregoing communications apparatuses may further include hardware devices for implementing other additional functions. In addition, a person skilled in the art should understand that the foregoing communications apparatuses may include only devices that are indispensable for implementing embodiments of this application but do not necessarily include all the devices shown in FIG. 12.

In addition, each functional unit in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A channel compensation method, comprising:
receiving (S601), by a first apparatus, a test signal sent by a second apparatus through a first channel, wherein the first channel is carried on a cable;
determining (S602), by the first apparatus, a target value of each tap coefficient of a filter based on frequency domain information of the test signal, wherein the filter is configured to compensate for a signal sent by the first apparatus;
updating (S603), by the first apparatus, a current value of each tap coefficient of the filter to the target value; and
sending (S604), by the first apparatus, a first signal to the second apparatus, wherein the first signal sequentially passes through the filter and the first channel,
wherein the frequency domain information of the test signal is used to indicate the smallest difference between high-frequency energy of the test signal and low-frequency energy of the test signal; or
the frequency domain information of the test signal is used to indicate the smallest ratio of peak energy of the test signal to average energy of the test signal; or
the frequency domain information of the test signal is used to indicate the smallest difference between a maximum signal-to-noise ratio of the test signal in frequency domain and a minimum signal-to-noise ratio of the test signal in frequency domain;
wherein the determining, by the first apparatus, a target value of each tap coefficient of a filter based on frequency domain information of the test signal comprises:
increasing, by the first apparatus, a value of a first tap coefficient of the filter;
if determining that a difference between the high-frequency energy and the low-frequency energy of the test signal that passes through the filter becomes smaller, continuing, by the first apparatus, to increase the value of the first tap coefficient until the difference between the high-frequency energy and the low-frequency energy of the test signal that passes through the filter is the smallest; or
if determining that a difference between the high-frequency energy and the low-frequency energy of the test signal that passes through the filter becomes larger, decreasing, by the first apparatus, the value of the first tap coefficient until the difference between the high-frequency energy and the low-frequency energy of the test signal that passes through the filter is the smallest; and
determining, by the first apparatus, a value, of the first tap coefficient, obtained after adjustment as a target value of the first tap coefficient; or
wherein the determining, by the first apparatus, a target value of each tap coefficient of a filter based on frequency domain information of the test signal comprises:
increasing, by the first apparatus, a value of a first tap coefficient of the filter;
if determining that a ratio of the peak energy to the average energy of the test signal that passes through the filter becomes smaller, continuing, by the first apparatus, to increase the value of the first tap coefficient until the ratio of the peak energy to the average energy of the test signal that passes through the filter is the smallest; or
if determining that a ratio of the peak energy to the average energy of the test signal that passes through the filter becomes larger, decreasing, by the first apparatus, the value of the first tap coefficient until the ratio of the peak energy to the average energy of the test signal that passes through the filter is the smallest; and
determining, by the first apparatus, a value, of the first tap coefficient, obtained after adjustment as a target value of the first tap coefficient; or
wherein the determining, by the first apparatus, a target value of each tap coefficient of a filter based on frequency domain information of the test signal comprises:
increasing, by the first apparatus, a value of a first tap coefficient of the filter;
if determining that a difference between the maximum signal-to-noise ratio and the minimum signal-to-noise ratio of the test signal that passes through the filter becomes smaller, continuing, by the first apparatus, to increase the value of the first tap coefficient until the difference between the maximum signal-to-noise ratio and the minimum signal-to-noise ratio of the test signal that passes through the filter is the smallest; or
if determining that a difference between the maximum signal-to-noise ratio and the minimum signal-to-noise ratio of the test signal that passes through the filter becomes larger, decreasing, by the first apparatus, the value of the first tap coefficient until the difference between the maximum signal-to-noise ratio and the minimum signal-to-noise ratio of the test signal that passes through the filter is the smallest; and
determining, by the first apparatus, a value, of the first tap coefficient, obtained after adjustment as a target value of the first tap coefficient.

2. The method according to claim 1, wherein the method further comprises:
obtaining, by the first apparatus, a target value of each tap coefficient of the filter corresponding to a second channel, wherein a length of the second channel is different from a length of the first channel; and
establishing, by the first apparatus, a correspondence between a length of a channel and a target value of each tap coefficient of the filter.

3. The method according to claim 2, wherein the method further comprises:
sending, by the first apparatus, the correspondence to the second apparatus.

4. A communications apparatus, wherein the communications apparatus is connected to a first apparatus through a cable, and the communications apparatus comprises a sending module, a receiving module, and a processing module, wherein
the receiving module is configured to receive a test signal sent by the first apparatus through a first channel, wherein the first channel is carried on the cable;
the processing module is configured to: determine a target value of each tap coefficient of a filter based on frequency domain information of the test signal, and update a current value of each tap coefficient of the filter to the target value, wherein the filter is configured to compensate for a signal sent by the communications apparatus; and
the sending module is configured to send a first signal to the first apparatus, wherein the first signal sequentially passes through the filter and the first channel;
wherein the frequency domain information of the test signal is used to indicate the smallest difference between high-frequency energy of the test signal and low-frequency energy of the test signal;
the frequency domain information of the test signal is used to indicate the smallest ratio of peak energy of the test signal to average energy of the test signal; or
the frequency domain information of the test signal is used to indicate the smallest difference between a maximum signal-to-noise ratio of the test signal in frequency domain and a minimum signal-to-noise ratio of the test signal in frequency domain;
wherein the processing module is specifically configured to:
increase a value of a first tap coefficient of the filter;
if it is determined that a difference between the high-frequency energy and the low-frequency energy of the test signal that passes through the filter becomes smaller, continue to increase the value of the first tap coefficient until the difference between the high-frequency energy and the low-frequency energy of the test signal that passes through the filter is the smallest; or
if it is determined that a difference between the high-frequency energy and the low-frequency energy of the test signal that passes through the filter becomes larger, decrease the value of the first tap coefficient until the difference between the high-frequency energy and the low-frequency energy of the test signal that passes through the filter is the smallest; and
determine a value, of the first tap coefficient, obtained after adjustment as a target value of the first tap coefficient; or
wherein the processing module is specifically configured to:
increase a value of a first tap coefficient of the filter;
if it is determined that a ratio of the peak energy to the average energy of the test signal that passes through the filter becomes smaller, continue to increase the value of the first tap coefficient until the ratio of the peak energy to the average energy of the test signal that passes through the filter is the smallest; or
if it is determined that a ratio of the peak energy to the average energy of the test signal that passes through the filter becomes larger, decrease the value of the first tap coefficient until the ratio of the peak energy to the average energy of the test signal that passes through the filter is the smallest; and
determine a value, of the first tap coefficient, obtained after adjustment as a target value of the first tap coefficient, or
wherein the processing module is specifically configured to:
increase a value of a first tap coefficient of the filter;
if it is determined that a difference between the maximum signal-to-noise ratio and the minimum signal-to-noise ratio of the test signal that passes through the filter becomes smaller, continue to increase the value of the first tap coefficient until the difference between the maximum signal-to-noise ratio and the minimum signal-to-noise ratio of the test signal that passes through the filter is the smallest; or
if it is determined that a difference between the maximum signal-to-noise ratio and the minimum signal-to-noise ratio of the test signal that passes through the filter becomes larger, decrease the value of the first tap coefficient until the difference between the maximum signal-to-noise ratio and the minimum signal-to-noise ratio of the test signal that passes through the filter is the smallest; and
determine a value, of the first tap coefficient, obtained after adjustment as a target value of the first tap coefficient.

5. A communications apparatus (1200), comprising a processor (1201) and a communications interface (1202), wherein the communications interface (1202) is used to communicate with another communications apparatus, and the processor (1201) is configured to run program code, so that the communications apparatus implements the method according to any one of claims 1 to 3.

6. A communications system, comprising a first apparatus and a second apparatus, wherein the first apparatus and the second apparatus are connected through a cable, wherein
the second apparatus is configured to send a test signal to the first apparatus through a first channel, wherein the first channel is carried on the cable, wherein the first apparatus is further configured to determine (S602) a target value of each tap coefficient of a filter based on frequency domain information of the test signal, wherein the filter is configured to compensate for a signal sent by the first apparatus;
to update (S603) a current value of each tap coefficient of the filter to the target value; and
to send (S604) a first signal to the second apparatus, wherein the first signal sequentially passes through the filter and the first channel,
wherein the frequency domain information of the test signal is used to indicate the smallest difference between high-frequency energy of the test signal and low-frequency energy of the test signal; or
the frequency domain information of the test signal is used to indicate the smallest ratio of peak energy of the test signal to average energy of the test signal; or
the frequency domain information of the test signal is used to indicate the smallest difference between a maximum signal-to-noise ratio of the test signal in frequency domain and a minimum signal-to-noise ratio of the test signal in frequency domain;
wherein the determining, by the first apparatus, a target value of each tap coefficient of a filter based on frequency domain information of the test signal comprises:
increasing, by the first apparatus, a value of a first tap coefficient of the filter;
if determining that a difference between the high-frequency energy and the low-frequency energy of the test signal that passes through the filter becomes smaller, continuing, by the first apparatus, to increase the value of the first tap coefficient until the difference between the high-frequency energy and the low-frequency energy of the test signal that passes through the filter is the smallest; or
if determining that a difference between the high-frequency energy and the low-frequency energy of the test signal that passes through the filter becomes larger, decreasing, by the first apparatus, the value of the first tap coefficient until the difference between the high-frequency energy and the low-frequency energy of the test signal that passes through the filter is the smallest; and
wherein the first apparatus is configured to determine a value, of the first tap coefficient, obtained after adjustment as a target value of the first tap coefficient; or
wherein the first apparatus is configured to determine a target value of each tap coefficient of a filter based on frequency domain information of the test signal, the first apparatus is configured to:
increase a value of a first tap coefficient of the filter;
if determining that a ratio of the peak energy to the average energy of the test signal that passes through the filter becomes smaller, continuing, by the first apparatus, to increase the value of the first tap coefficient until the ratio of the peak energy to the average energy of the test signal that passes through the filter is the smallest; or
if determining that a ratio of the peak energy to the average energy of the test signal that passes through the filter becomes larger, decreasing, by the first apparatus, the value of the first tap coefficient until the ratio of the peak energy to the average energy of the test signal that passes through the filter is the smallest; and
determining, by the first apparatus, a value, of the first tap coefficient, obtained after adjustment as a target value of the first tap coefficient; or
wherein the first apparatus is configured to determine a target value of each tap coefficient of a filter based on frequency domain information of the test signal, the first apparatus is configured to:
increase a value of a first tap coefficient of the filter;
if determining that a difference between the maximum signal-to-noise ratio and the minimum signal-to-noise ratio of the test signal that passes through the filter becomes smaller, continuing, by the first apparatus, to increase the value of the first tap coefficient until the difference between the maximum signal-to-noise ratio and the minimum signal-to-noise ratio of the test signal that passes through the filter is the smallest; or
if determining that a difference between the maximum signal-to-noise ratio and the minimum signal-to-noise ratio of the test signal that passes through the filter becomes larger, decreasing, by the first apparatus, the value of the first tap coefficient until the difference between the maximum signal-to-noise ratio and the minimum signal-to-noise ratio of the test signal that passes through the filter is the smallest; and
to determine, by the first apparatus, a value, of the first tap coefficient, obtained after adjustment as a target value of the first tap coefficient.

## Patentansprüche

1. Kanalausgleichsverfahren, umfassend:
Empfangen (S601), durch eine erste Vorrichtung, eines Testsignals, das durch eine zweite Vorrichtung über einen ersten Kanal gesendet wird, wobei der erste Kanal über ein Kabel übertragen wird;
Bestimmen (S602), durch die erste Vorrichtung, eines Sollwerts für jeden Tap-Koeffizienten eines Filters basierend auf Frequenzdomäneninformationen des Testsignals, wobei der Filter dazu konfiguriert ist, ein Signal zu kompensieren, das durch die erste Vorrichtung gesendet wird;
Aktualisieren (S603), durch die erste Vorrichtung, eines aktuellen Werts eines jeden Tap-Koeffizienten des Filters auf den Sollwert; und
Senden (S604), durch die erste Vorrichtung, eines ersten Signals an die zweite Vorrichtung, wobei das erste Signal nacheinander den Filter und den ersten Kanal durchläuft,
wobei die Frequenzdomäneninformationen des Testsignals dazu verwendet werden, die kleinste Differenz zwischen Hochfrequenzenergie des Testsignals und Niederfrequenzenergie des Testsignals anzugeben; oder
die Frequenzdomäneninformationen des Testsignals dazu verwendet werden, das kleinste Verhältnis von Spitzenenergie des Testsignals zu Durchschnittsenergie des Testsignals anzugeben; oder
die Frequenzdomäneninformationen des Testsignals dazu verwendet werden, die kleinste Differenz zwischen einem maximalen Signal-Rausch-Verhältnis des Testsignals in einer Frequenzdomäne und einem minimalen Signal-Rausch-Verhältnis des Testsignals in der Frequenzdomäne anzugeben;
wobei das Bestimmen, durch die erste Vorrichtung, eines Sollwerts eines jeden Tap-Koeffizienten eines Filters basierend auf Frequenzdomäneninformationen des Testsignals Folgendes umfasst:
Erhöhen, durch die erste Vorrichtung, eines Werts eines ersten Tap-Koeffizienten des Filters;
wenn bestimmt wird, dass eine Differenz zwischen der Hochfrequenzenergie und der Niederfrequenzenergie des Testsignals, das den Filter durchläuft, kleiner wird, Fortsetzen, durch die erste Vorrichtung des Erhöhens des Werts des ersten Tap-Koeffizienten, bis die Differenz zwischen der Hochfrequenzenergie und der Niederfrequenzenergie des Testsignals, das den Filter durchläuft, am kleinsten ist; oder, wenn bestimmt wird, dass eine Differenz zwischen der Hochfrequenzenergie und der Niederfrequenzenergie des Testsignals, das den Filter durchläuft, größer wird, Verringern, durch die erste Vorrichtung, des Werts des ersten Tap-Koeffizienten, bis die Differenz zwischen der Hochfrequenzenergie und der Niederfrequenzenergie des Testsignals, das den Filter durchläuft, am kleinsten ist; und Bestimmen, durch die erste Vorrichtung, eines Werts des ersten Tap-Koeffizienten, der nach einer Einstellung als ein Sollwert des ersten Tap-Koeffizienten erlangt wurde; oder
wobei das Bestimmen, durch die erste Vorrichtung, eines Sollwerts eines jeden Tap-Koeffizienten eines Filters basierend auf Frequenzdomäneninformationen des Testsignals Folgendes umfasst:
Erhöhen, durch die erste Vorrichtung, eines Werts eines ersten Tap-Koeffizienten des Filters;
wenn bestimmt wird, dass ein Verhältnis der Spitzenenergie zu der Durchschnittsenergie des Testsignals, das den Filter durchläuft, kleiner wird, Fortsetzen, durch die erste Vorrichtung, des Erhöhens des Werts des ersten Tap-Koeffizienten, bis das Verhältnis der Spitzenenergie zu der Durchschnittsenergie des Testsignals, das den Filter durchläuft, am kleinsten ist; oder,
wenn bestimmt wird, dass ein Verhältnis der Spitzenenergie zu der Durchschnittsenergie des Testsignals, das den Filter durchläuft, größer wird, Verringern, durch die erste Vorrichtung, des Werts des ersten Tap-Koeffizienten, bis das Verhältnis der Spitzenenergie zu der Durchschnittsenergie des Testsignals, das den Filter durchläuft, am kleinsten ist; und
Bestimmen, durch die erste Vorrichtung, eines Werts des ersten Tap-Koeffizienten, der nach einer Einstellung als ein Sollwert des ersten Tap-Koeffizienten erlangt wurde; oder
wobei das Bestimmen, durch die erste Vorrichtung, eines Sollwerts eines jeden Tap-Koeffizienten eines Filters basierend auf Frequenzdomäneninformationen des Testsignals Folgendes umfasst:
Erhöhen, durch die erste Vorrichtung, eines Werts eines ersten Tap-Koeffizienten des Filters;
wenn bestimmt wird, dass eine Differenz zwischen dem maximalen Signal-Rausch-Verhältnis und dem minimalen Signal-Rausch-Verhältnis des Testsignals, das den Filter durchläuft, kleiner wird, Fortsetzen, durch die erste Vorrichtung, des Erhöhens des Werts des ersten Tap-Koeffizienten, bis die Differenz zwischen dem maximalen Signal-Rausch-Verhältnis und dem minimalen Signal-Rausch-Verhältnis des Testsignals, das den Filter durchläuft, am kleinsten ist; oder,
wenn bestimmt wird, dass eine Differenz zwischen dem maximalen Signal-Rausch-Verhältnis und dem minimalen Signal-Rausch-Verhältnis des Testsignals, das den Filter durchläuft, größer wird, Verringern, durch die erste Vorrichtung, des Werts des ersten Tap-Koeffizienten, bis die Differenz zwischen dem maximalen Signal-Rausch-Verhältnis und dem minimalen Signal-Rausch-Verhältnis des Testsignals, das den Filter durchläuft, am kleinsten ist; und
Bestimmen, durch die erste Vorrichtung, eines Werts des ersten Tap-Koeffizienten, der nach einer Einstellung als ein Sollwert des ersten Tap-Koeffizienten erlangt wurde.

2. Verfahren nach Anspruch 1, wobei das Verfahren ferner Folgendes umfasst:
Erlangen, durch die erste Vorrichtung, eines Sollwerts für jeden Tap-Koeffizienten des Filters, der einem zweiten Kanal entspricht, wobei eine Länge des zweiten Kanals von einer Länge des ersten Kanals abweicht; und
Herstellen, durch die erste Vorrichtung, einer Entsprechung zwischen einer Länge eines Kanals und einem Sollwert eines jeden Tap-Koeffizienten des Filters.

3. Verfahren nach Anspruch 2, wobei das Verfahren ferner Folgendes umfasst:
Senden, durch die erste Vorrichtung, der Entsprechung an die zweite Vorrichtung.

4. Kommunikationsvorrichtung, wobei die Kommunikationsvorrichtung mit einer ersten Vorrichtung über ein Kabel verbunden ist und die Kommunikationsvorrichtung ein Sendemodul, ein Empfangsmodul und ein Verarbeitungsmodul umfasst, wobei
das Empfangsmodul dazu konfiguriert ist, ein Testsignal zu empfangen, das durch die erste Vorrichtung über einen ersten Kanal gesendet wird, wobei der erste Kanal über das Kabel übertragen wird;
das Verarbeitungsmodul zu Folgendem konfiguriert ist: Bestimmen eines Sollwerts eines jeden Tap-Koeffizienten eines Filters basierend auf Frequenzdomäneninformationen des Testsignals und Aktualisieren eines aktuellen Werts eines jeden Tap-Koeffizienten des Filters auf den Sollwert, wobei der Filter dazu konfiguriert ist, ein Signal, das durch die Kommunikationsvorrichtung gesendet wird, zu kompensieren; und das Sendemodul dazu konfiguriert ist, ein erstes Signal an die erste Vorrichtung zu senden, wobei das erste Signal nacheinander den Filter und den ersten Kanal durchläuft;
wobei die Frequenzdomäneninformationen des Testsignals dazu verwendet werden, die kleinste Differenz zwischen Hochfrequenzenergie des Testsignals und Niederfrequenzenergie des Testsignals anzugeben;
die Frequenzdomäneninformationen des Testsignals dazu verwendet werden, das kleinste Verhältnis von Spitzenenergie des Testsignals zu Durchschnittsenergie des Testsignals anzugeben; oder
die Frequenzdomäneninformationen des Testsignals dazu verwendet werden, die kleinste Differenz zwischen einem maximalen Signal-Rausch-Verhältnis des Testsignals in einer Frequenzdomäne und einem minimalen Signal-Rausch-Verhältnis des Testsignals in der Frequenzdomäne anzugeben;
wobei das Verarbeitungsmodul insbesondere zu Folgendem konfiguriert ist:
Erhöhen eines Werts eines ersten Tap-Koeffizienten des Filters; wenn bestimmt wird, dass eine Differenz zwischen der Hochfrequenzenergie und der Niederfrequenzenergie des Testsignals, das den Filter durchläuft, kleiner wird, Fortsetzen des Erhöhens des Werts des ersten Tap-Koeffizienten, bis die Differenz zwischen der Hochfrequenzenergie und der Niederfrequenzenergie des Testsignals, das den Filter durchläuft, am kleinsten ist; oder,
wenn bestimmt wird, dass eine Differenz zwischen der Hochfrequenzenergie und der Niederfrequenzenergie des Testsignals, das den Filter durchläuft, größer wird, Verringern des Werts des ersten Tap-Koeffizienten, bis die Differenz zwischen der Hochfrequenzenergie und der Niederfrequenzenergie des Testsignals, das den Filter durchläuft, am kleinsten ist; und,
Bestimmen eines Werts des ersten Tap-Koeffizienten, der nach einer Einstellung als ein Sollwert des ersten Tap-Koeffizienten erlangt wurde; oder
wobei das Verarbeitungsmodul insbesondere zu Folgendem konfiguriert ist:
Erhöhen eines Werts eines ersten Tap-Koeffizienten des Filters; wenn bestimmt wird, dass ein Verhältnis der Spitzenenergie zu der Durchschnittsenergie des Testsignals, das den Filter durchläuft, kleiner wird, Fortsetzen des Erhöhens des Werts des ersten Tap-Koeffizienten, bis das Verhältnis der Spitzenenergie zu der Durchschnittsenergie des Testsignals, das den Filter durchläuft, am kleinsten ist; oder,
wenn bestimmt wird, dass ein Verhältnis der Spitzenenergie zu der Durchschnittsenergie des Testsignals, das den Filter durchläuft, größer wird, Verringern des Werts des ersten Tap-Koeffizienten, bis das Verhältnis der Spitzenenergie zu der Durchschnittsenergie des Testsignals, das den Filter durchläuft, am kleinsten ist; und,
Bestimmen eines Werts des ersten Tap-Koeffizienten, der nach einer Einstellung als ein Sollwert des ersten Tap-Koeffizienten erlangt wurde, oder
wobei das Verarbeitungsmodul insbesondere zu Folgendem konfiguriert ist:
Erhöhen eines Werts eines ersten Tap-Koeffizienten des Filters; wenn bestimmt wird, dass eine Differenz zwischen dem maximalen Signal-Rausch-Verhältnis und dem minimalen Signal-Rausch-Verhältnis des Testsignals, das den Filter durchläuft, kleiner wird, Fortsetzen des Erhöhens des Werts des ersten Tap-Koeffizienten, bis die Differenz zwischen dem maximalen Signal-Rausch-Verhältnis und dem minimalen Signal-Rausch-Verhältnis des Testsignals, das den Filter durchläuft, am kleinsten ist; oder,
wenn bestimmt wird, dass eine Differenz zwischen dem maximalen Signal-Rausch-Verhältnis und dem minimalen Signal-Rausch-Verhältnis des Testsignals, das den Filter durchläuft, größer wird, Verringern des Werts des ersten Tap-Koeffizienten, bis die Differenz zwischen dem maximalen Signal-Rausch-Verhältnis und dem minimalen Signal-Rausch-Verhältnis des Testsignals, das den Filter durchläuft, am kleinsten ist; und
Bestimmen eines Werts des ersten Tap-Koeffizienten, der nach einer Einstellung als ein Sollwert des ersten Tap-Koeffizienten erlangt wurde.

5. Kommunikationsvorrichtung (1200), umfassend einen Prozessor (1201) und eine Kommunikationsschnittstelle (1202), wobei die Kommunikationsschnittstelle (1202) dazu verwendet wird, mit einer anderen Kommunikationsvorrichtung zu kommunizieren und der Prozessor (1201) dazu konfiguriert ist, einen Programmcode auszuführen, sodass die Kommunikationsvorrichtung das Verfahren nach einem der Ansprüche 1 bis 3 implementiert.

6. Kommunikationssystem, umfassend eine erste Vorrichtung und eine zweite Vorrichtung, wobei
die erste Vorrichtung und die zweite Vorrichtung über ein Kabel verbunden sind, wobei die zweite Vorrichtung dazu konfiguriert ist, ein Testsignal an die erste Vorrichtung über einen ersten Kanal zu senden, wobei der erste Kanal auf dem Kabel übertragen wird, wobei die erste Vorrichtung ferner dazu konfiguriert ist, einen Sollwert eines jeden Tap-Koeffizienten eines Filters basierend auf Frequenzdomäneninformationen des Testsignals zu bestimmen (S602), wobei der Filter dazu konfiguriert ist, ein Signal zu kompensieren, das durch die erste Vorrichtung gesendet wurde;
einen aktuellen Wert eines jeden Tap-Koeffizienten des Filters auf den Sollwert zu aktualisieren (S603); und
ein erstes Signal an die zweite Vorrichtung zu senden (S604), wobei das erste Signal nacheinander den Filter und den ersten Kanal durchläuft,
wobei die Frequenzdomäneninformationen des Testsignals dazu verwendet werden, die kleinste Differenz zwischen Hochfrequenzenergie des Testsignals und Niederfrequenzenergie des Testsignals anzugeben; oder
die Frequenzdomäneninformationen des Testsignals dazu verwendet werden, das kleinste Verhältnis von Spitzenenergie des Testsignals zu Durchschnittsenergie des Testsignals anzugeben; oder
die Frequenzdomäneninformationen des Testsignals dazu verwendet werden, die kleinste Differenz zwischen einem maximalen Signal-Rausch-Verhältnis des Testsignals in einer Frequenzdomäne und einem minimalen Signal-Rausch-Verhältnis des Testsignals in der Frequenzdomäne anzugeben;
wobei das Bestimmen, durch die erste Vorrichtung, eines Sollwerts eines jeden Tap-Koeffizienten eines Filters basierend auf Frequenzdomäneninformationen des Testsignals Folgendes umfasst:
Erhöhen, durch die erste Vorrichtung, eines Werts eines ersten Tap-Koeffizienten des Filters;
wenn bestimmt wird, dass eine Differenz zwischen der Hochfrequenzenergie und der Niederfrequenzenergie des Testsignals, das den Filter durchläuft, kleiner wird, Fortsetzen, durch die erste Vorrichtung des Erhöhens des Werts des ersten Tap-Koeffizienten, bis die Differenz zwischen der Hochfrequenzenergie und der Niederfrequenzenergie des Testsignals, das den Filter durchläuft, am kleinsten ist; oder, wenn bestimmt wird, dass eine Differenz zwischen der Hochfrequenzenergie und der Niederfrequenzenergie des Testsignals, das den Filter durchläuft, größer wird, Verringern, durch die erste Vorrichtung, des Werts des ersten Tap-Koeffizienten, bis die Differenz zwischen der Hochfrequenzenergie und der Niederfrequenzenergie des Testsignals, das den Filter durchläuft, am kleinsten ist; und wobei die erste Vorrichtung dazu konfiguriert ist, einen Wert des ersten Tap-Koeffizienten zu bestimmen, der nach einer Einstellung als ein Sollwert des ersten Tap-Koeffizienten erlangt wurde; oder
wobei die erste Vorrichtung dazu konfiguriert ist, einen Sollwert eines jeden Tap-Koeffizienten eines Filters basierend auf Frequenzdomäneninformationen des Testsignals zu bestimmen und die erste Vorrichtung zu Folgendem konfiguriert ist:
Erhöhen eines Werts eines ersten Tap-Koeffizienten des Filters; wenn bestimmt wird, dass ein Verhältnis der Spitzenenergie zu der Durchschnittsenergie des Testsignals, das den Filter durchläuft, kleiner wird, Fortsetzen, durch die erste Vorrichtung, des Erhöhens des Werts des ersten Tap-Koeffizienten, bis das Verhältnis der Spitzenenergie zu der Durchschnittsenergie des Testsignals, das den Filter durchläuft, am kleinsten ist; oder,
wenn bestimmt wird, dass ein Verhältnis der Spitzenenergie zu der Durchschnittsenergie des Testsignals, das den Filter durchläuft, größer wird, Verringern, durch die erste Vorrichtung, des Werts des ersten Tap-Koeffizienten, bis das Verhältnis der Spitzenenergie zu der Durchschnittsenergie des Testsignals, das den Filter durchläuft, am kleinsten ist; und Bestimmen, durch die erste Vorrichtung, eines Werts des ersten Tap-Koeffizienten, der nach einer Einstellung als ein Sollwert des ersten Tap-Koeffizienten erlangt wurde; oder
wobei die erste Vorrichtung dazu konfiguriert ist, einen Sollwert eines jeden Tap-Koeffizienten eines Filters basierend auf Frequenzdomäneninformationen des Testsignals zu bestimmen und die erste Vorrichtung zu Folgendem konfiguriert ist:
Erhöhen eines Werts eines ersten Tap-Koeffizienten des Filters, wenn bestimmt wird, dass eine Differenz zwischen dem maximalen Signal-Rausch-Verhältnis und dem minimalen Signal-Rausch-Verhältnis des Testsignals, das den Filter durchläuft, kleiner wird, Fortsetzen, durch die erste Vorrichtung, des Erhöhens des Werts des ersten Tap-Koeffizienten, bis die Differenz zwischen dem maximalen Signal-Rausch-Verhältnis und dem minimalen Signal-Rausch-Verhältnis des Testsignals, das den Filter durchläuft, am kleinsten ist; oder,
wenn bestimmt wird, dass eine Differenz zwischen dem maximalen Signal-Rausch-Verhältnis und dem minimalen Signal-Rausch-Verhältnis des Testsignals, das den Filter durchläuft, größer wird, Verringern, durch die erste Vorrichtung, des Werts des ersten Tap-Koeffizienten, bis die Differenz zwischen dem maximalen Signal-Rausch-Verhältnis und dem minimalen Signal-Rausch-Verhältnis des Testsignals, das den Filter durchläuft, am kleinsten ist; und
Bestimmen, durch erste Vorrichtung, eines Werts des ersten Tap-Koeffizienten, der nach einer Einstellung als ein Sollwert des ersten Tap-Koeffizienten erlangt wurde.

## Revendications

1. Procédé de compensation de canal, comprenant :
la réception (S601), par un premier appareil, d'un signal de test envoyé par un second appareil par un premier canal, dans lequel le premier canal est transporté par câble ;
la détermination (S602), par le premier appareil, d'une valeur cible de chaque coefficient de prise d'un filtre sur la base des informations du domaine fréquentiel du signal de test, dans lequel le filtre est configuré pour compenser un signal envoyé par le premier appareil ;
la mise à jour (S603), par le premier appareil, d'une valeur actuelle de chaque coefficient de prise du filtre à la valeur cible ; et
l'envoi (S604), par le premier appareil, d'un premier signal au second appareil, dans lequel le premier signal traverse séquentiellement le filtre et le premier canal,
dans lequel les informations du domaine fréquentiel du signal de test sont utilisées pour indiquer la plus petite différence entre l'énergie haute fréquence du signal de test et l'énergie basse fréquence du signal de test ; ou
les informations du domaine fréquentiel du signal de test sont utilisées pour indiquer le plus petit rapport entre l'énergie de crête du signal de test et l'énergie moyenne du signal de test ; ou
les informations du domaine fréquentiel du signal de test sont utilisées pour indiquer la plus petite différence entre un rapport signal/bruit maximal du signal de test dans le domaine fréquentiel et un rapport signal/bruit minimal du signal de test dans le domaine fréquentiel ;
dans lequel la détermination, par le premier appareil, d'une valeur cible de chaque coefficient de prise d'un filtre sur la base des informations du domaine fréquentiel du signal de test comprend :
l'augmentation, par le premier appareil, d'une valeur d'un premier coefficient de prise du filtre ;
si la détermination qu'une différence entre l'énergie haute fréquence et l'énergie basse fréquence du signal de test qui traverse le filtre diminue, la poursuite, par le premier appareil, de l'augmentation de la valeur du premier coefficient de prise jusqu'à ce que la différence entre l'énergie haute fréquence et l'énergie basse fréquence du signal de test qui traverse le filtre soit minimale ; ou
si la détermination qu'une différence entre l'énergie haute fréquence et l'énergie basse fréquence du signal de test qui traverse le filtre augmente, la diminution, par le premier appareil, de la valeur du premier coefficient de prise jusqu'à ce que la différence entre l'énergie haute fréquence et l'énergie basse fréquence du signal de test qui traverse le filtre soit minimale ; et
la détermination, par le premier appareil, d'une valeur, du premier coefficient de prise, obtenue après ajustement comme valeur cible du premier coefficient de prise ; ou
dans lequel la détermination, par le premier appareil, d'une valeur cible de chaque coefficient de prise d'un filtre sur la base des informations du domaine fréquentiel du signal de test comprend :
l'augmentation, par le premier appareil, d'une valeur d'un premier coefficient de prise du filtre ;
si la détermination qu'un rapport entre l'énergie de crête et l'énergie moyenne du signal de test qui traverse le filtre diminue, la poursuite, par le premier appareil, de l'augmentation de la valeur du premier coefficient de prise jusqu'à ce que le rapport entre l'énergie de crête et l'énergie moyenne du signal de test qui traverse le filtre soit minimal ; ou
si la détermination qu'un rapport entre l'énergie de crête et l'énergie moyenne du signal de test qui traverse le filtre augmente, la diminution, par le premier appareil, de la valeur du premier coefficient de prise jusqu'à ce que le rapport entre l'énergie de crête et l'énergie moyenne du signal de test qui traverse le filtre soit minimal ; et
la détermination, par le premier appareil, d'une valeur, du premier coefficient de prise, obtenue après ajustement comme valeur cible du premier coefficient de prise ; ou
dans lequel la détermination, par le premier appareil, d'une valeur cible de chaque coefficient de prise d'un filtre sur la base des informations du domaine fréquentiel du signal de test comprend :
l'augmentation, par le premier appareil, d'une valeur d'un premier coefficient de prise du filtre ;
si la détermination qu'une différence entre le rapport signal/bruit maximal et le rapport signal/bruit minimal du signal de test qui traverse le filtre diminue, la poursuite, par le premier appareil, de l'augmentation de la valeur du premier coefficient de prise jusqu'à ce que la différence entre le rapport signal/bruit maximal et le rapport signal/bruit minimal du signal de test qui traverse le filtre soit minimale ; ou
si la détermination qu'une différence entre le rapport signal/bruit maximal et le rapport signal/bruit minimal du signal de test qui traverse le filtre augmente, la diminution, par le premier appareil, de la valeur du premier coefficient de prise jusqu'à ce que la différence entre le rapport signal/bruit maximal et le rapport signal/bruit minimal du signal de test qui traverse le filtre soit minimale ; et
la détermination, par le premier appareil, d'une valeur, du premier coefficient de prise, obtenue après ajustement comme valeur cible du premier coefficient de prise.

2. Procédé selon la revendication 1, dans lequel le procédé comprend en outre :
l'obtention, par le premier appareil, d'une valeur cible de chaque coefficient de prise du filtre correspondant à un second canal, dans lequel une longueur du second canal est différente d'une longueur du premier canal ; et
l'établissement, par le premier appareil, d'une correspondance entre une longueur d'un canal et une valeur cible de chaque coefficient de prise du filtre.

3. Procédé selon la revendication 2, dans lequel le procédé comprend en outre :
l'envoi, par le premier appareil, de la correspondance au second appareil.

4. Appareil de communication, dans lequel l'appareil de communication est connecté à un premier appareil par un câble, et l'appareil de communication comprend un module d'émission, un module de réception et un module de traitement, dans lequel le module de réception est configuré pour recevoir un signal de test envoyé par le premier appareil par un premier canal, dans lequel le premier canal est transporté par câble ;
le module de traitement est configuré pour : déterminer une valeur cible pour chaque coefficient de prise d'un filtre sur la base des informations du domaine fréquentiel du signal de test, et mettre à jour une valeur actuelle de chaque coefficient de prise du filtre à la valeur cible, dans lequel le filtre est configuré pour compenser un signal émis par l'appareil de communication ; et
le module d'envoi est configuré pour envoyer un premier signal au premier appareil, dans lequel le premier signal traverse séquentiellement le filtre et le premier canal ;
dans lequel les informations du domaine fréquentiel du signal de test sont utilisées pour indiquer la plus petite différence entre l'énergie haute fréquence du signal de test et l'énergie basse fréquence du signal de test ;
les informations du domaine fréquentiel du signal de test sont utilisées pour indiquer le plus petit rapport entre l'énergie de crête du signal de test et l'énergie moyenne du signal de test ; ou
les informations du domaine fréquentiel du signal de test sont utilisées pour indiquer la plus petite différence entre un rapport signal/bruit maximal du signal de test dans le domaine fréquentiel et un rapport signal/bruit minimal du signal de test dans le domaine fréquentiel ;
dans lequel le module de traitement est spécifiquement configuré pour :
augmenter une valeur d'un premier coefficient de prise du filtre ;
s'il est déterminé qu'une différence entre l'énergie haute fréquence et l'énergie basse fréquence du signal de test qui traverse le filtre diminue, la poursuite de l'augmentation de la valeur du premier coefficient de prise jusqu'à ce que la différence entre l'énergie haute fréquence et l'énergie basse fréquence du signal de test qui traverse le filtre soit minimale ; ou
s'il est déterminé qu'une différence entre l'énergie haute fréquence et l'énergie basse fréquence du signal de test qui traverse le filtre augmente, la diminution de la valeur du premier coefficient de prise jusqu'à ce que la différence entre l'énergie haute fréquence et l'énergie basse fréquence du signal de test qui traverse le filtre soit minimale ; et
déterminer une valeur, du premier coefficient de prise, obtenue après ajustement comme valeur cible du premier coefficient de prise ; ou
dans lequel le module de traitement est spécifiquement configuré pour :
augmenter une valeur d'un premier coefficient de prise du filtre ;
s'il est déterminé qu'un rapport entre l'énergie de crête et l'énergie moyenne du signal de test qui traverse le filtre diminue, la poursuite de l'augmentation de la valeur du premier coefficient de prise jusqu'à ce que le rapport entre l'énergie de crête et l'énergie moyenne du signal de test qui traverse le filtre soit minimal ; ou
s'il est déterminé qu'un rapport entre l'énergie de crête et l'énergie moyenne du signal de test qui traverse le filtre augmente, la diminution de la valeur du premier coefficient de prise jusqu'à ce que le rapport entre l'énergie de crête et l'énergie moyenne du signal de test qui traverse le filtre soit minimal ; et
déterminer une valeur, du premier coefficient de prise, obtenue après ajustement comme valeur cible du premier coefficient de prise, ou
dans lequel le module de traitement est spécifiquement configuré pour :
augmenter une valeur d'un premier coefficient de prise du filtre ;
s'il est déterminé qu'une différence entre le rapport signal/bruit maximal et le rapport signal/bruit minimal du signal de test qui traverse le filtre diminue, la poursuite de l'augmentation de la valeur du premier coefficient de prise jusqu'à ce que la différence entre le rapport signal/bruit maximal et le rapport signal/bruit minimal du signal de test qui traverse le filtre soit minimale ; ou
s'il est déterminé qu'une différence entre le rapport signal/bruit maximal et le rapport signal/bruit minimal du signal de test qui traverse le filtre augmente, la diminution de la valeur du premier coefficient de prise jusqu'à ce que la différence entre le rapport signal/bruit maximal et le rapport signal/bruit minimal du signal de test qui traverse le filtre soit minimale ; et
déterminer une valeur, du premier coefficient de prise, obtenue après ajustement comme valeur cible du premier coefficient de prise.

5. Appareil de communication (1200), comprenant un processeur (1201) et une interface de communication (1202), dans lequel l'interface de communication (1202) est utilisée pour communiquer avec un autre appareil de communication, et le processeur (1201) est configuré pour exécuter un code de programme, de sorte que l'appareil de communication met en œuvre le procédé selon l'une quelconque des revendications 1 à 3.

6. Système de communication, comprenant un premier appareil et un second appareil, dans lequel
le premier appareil et le second appareil sont connectés par un câble, dans lequel le second appareil est configuré pour envoyer un signal de test au premier appareil par un premier canal, dans lequel le premier canal est transporté par câble, dans lequel le premier appareil est en outre configuré pour déterminer (S602) une valeur cible de chaque coefficient de prise d'un filtre sur la base des informations du domaine fréquentiel du signal de test, dans lequel le filtre est configuré pour compenser un signal envoyé par le premier appareil ;
pour mettre à jour (S603) une valeur actuelle de chaque coefficient de prise du filtre à la valeur cible ; et
pour envoyer (S604) un premier signal au second appareil, dans lequel le premier signal traverse séquentiellement le filtre et le premier canal,
dans lequel les informations du domaine fréquentiel du signal de test sont utilisées pour indiquer la plus petite différence entre l'énergie haute fréquence du signal de test et l'énergie basse fréquence du signal de test ; ou
les informations du domaine fréquentiel du signal de test sont utilisées pour indiquer le plus petit rapport entre l'énergie de crête du signal de test et l'énergie moyenne du signal de test ; ou
les informations du domaine fréquentiel du signal de test sont utilisées pour indiquer la plus petite différence entre un rapport signal/bruit maximal du signal de test dans le domaine fréquentiel et un rapport signal/bruit minimal du signal de test dans le domaine fréquentiel ;
dans lequel la détermination, par le premier appareil, d'une valeur cible de chaque coefficient de prise d'un filtre sur la base des informations du domaine fréquentiel du signal de test comprend :
l'augmentation, par le premier appareil, d'une valeur d'un premier coefficient de prise du filtre ;
si la détermination qu'une différence entre l'énergie haute fréquence et l'énergie basse fréquence du signal de test qui traverse le filtre diminue, la poursuite, par le premier appareil, de l'augmentation de la valeur du premier coefficient de prise jusqu'à ce que la différence entre l'énergie haute fréquence et l'énergie basse fréquence du signal de test qui traverse le filtre soit minimale ; ou
si la détermination qu'une différence entre l'énergie haute fréquence et l'énergie basse fréquence du signal de test qui traverse le filtre augmente, la diminution, par le premier appareil, de la valeur du premier coefficient de prise jusqu'à ce que la différence entre l'énergie haute fréquence et l'énergie basse fréquence du signal de test qui traverse le filtre soit minimale ; et
dans lequel le premier appareil est configuré pour déterminer une valeur, du premier coefficient de prise, obtenue après ajustement comme valeur cible du premier coefficient de prise ; ou
dans lequel le premier appareil est configuré pour déterminer une valeur cible de chaque coefficient de prise d'un filtre sur la base des informations du domaine fréquentiel du signal de test, le premier appareil est configuré pour :
augmenter une valeur d'un premier coefficient de prise du filtre ;
si la détermination qu'un rapport entre l'énergie de crête et l'énergie moyenne du signal de test qui traverse le filtre diminue, la poursuite, par le premier appareil, de l'augmentation de la valeur du premier coefficient de prise jusqu'à ce que le rapport entre l'énergie de crête et l'énergie moyenne du signal de test qui traverse le filtre soit minimal ; ou
si la détermination qu'un rapport entre l'énergie de crête et l'énergie moyenne du signal de test qui traverse le filtre augmente, la diminution, par le premier appareil, de la valeur du premier coefficient de prise jusqu'à ce que le rapport entre l'énergie de crête et l'énergie moyenne du signal de test qui traverse le filtre soit minimal ; et
la détermination, par le premier appareil, d'une valeur, du premier coefficient de prise, obtenue après ajustement comme valeur cible du premier coefficient de prise ; ou
dans lequel le premier appareil est configuré pour déterminer une valeur cible de chaque coefficient de prise d'un filtre sur la base des informations du domaine fréquentiel du signal de test, le premier appareil est configuré pour :
augmenter une valeur du premier coefficient de prise du filtre ; si la détermination qu'une différence entre le rapport signal/bruit maximal et le rapport signal/bruit minimal du signal de test qui traverse le filtre diminue, la poursuite, par le premier appareil, de l'augmentation de la valeur du premier coefficient de prise jusqu'à ce que la différence entre le rapport signal/bruit maximal et le rapport signal/bruit minimal du signal de test qui traverse le filtre soit minimale ; ou
si la détermination qu'une différence entre le rapport signal/bruit maximal et le rapport signal/bruit minimal du signal de test qui traverse le filtre augmente, la diminution, par le premier appareil, de la valeur du premier coefficient de prise jusqu'à ce que la différence entre le rapport signal/bruit maximal et le rapport signal/bruit minimal du signal de test qui traverse le filtre soit minimale ; et
pour déterminer, par le premier appareil, une valeur, du premier coefficient de prise, obtenue après ajustement comme valeur cible du premier coefficient de prise.
